# EUROPEAN PATENT APPLICATION

(11) **EP 4 311 158 A1**
(43) Date of publication of application: **24.01.2024**
(21) Application number: 23173595.2
(22) Date of filing: 16.05.2023
(51) Int. Cl.: H04L 9/00, H04L 9/30

(54) **EFFICIENT LOW-OVERHEAD SIDE-CHANNEL PROTECTION FOR POLYNOMIAL MULTIPLICATION IN POST-QUANTUM ENCRYPTION**

(30) Priority: 22.07.2022 US 202217814448
(71) Applicant: INTEL Corporation, Santa Clara, CA 95054 (US)
(72) Inventor: Basso, Andrea, London, W6 7QQ (GB); DINU, Dumitru-Daniel, Chandler, AZ, 85226 (US); GHOSH, Santosh, Hillsboro, OR, 97124 (US); SASTRY, Manoj R., Portland, OR, 97229 (US)
(74) Representative: Viering, Jentschura & Partner mbB Patent- und Rechtsanwälte

(57) **Abstract**

In one example an apparatus comprises a first input node to receive a first input, a second input node to receive a control signal, a polynomial multiplication circuitry to perform a polynomial multiplication operation using the first input in a security mode determined by the control signal, the security mode comprising one of a first mode in which no side-channel protection is provided to the polynomial multiplication operation, a second mode in which a shuffling-based side-channel protection is provided to the polynomial multiplication operation, a third mode in which a masking or splitting side-channel protection is provided to the polynomial multiplication operation, or a fourth mode in which a masking and shuffling based side-channel protection is provided to the polynomial multiplication operation. Other examples may be described.

## Description

### BACKGROUND

Subject matter described herein relates generally to the field of computer security and more particularly to techniques for efficient, low-overhead side-channel protection for polynomial multiplication which may be useful, among other things, for post-quantum cryptography hash-based signing and verification.

Existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. As a result, there are efforts underway in the cryptography research community and in various standards bodies to define new standards for algorithms that are secure against quantum computers.

Accordingly, techniques to accelerate calculations used in signature and verification schemes such as extended Merkle signature scheme (XMSS) and Leighton/Micali signature (LMS) schemes and in encryption techniques such as Advanced Encryption Standards (AES) encryption schemes may find utility, e.g., in computer-based communication systems and methods.

### BRIEF DESCRIPTION OF THE DRAWINGS

The detailed description is described with reference to the accompanying figures.
Figs. 1A and 1B are schematic illustrations of a one-time hash-based signatures scheme and a multi-time hash-based signatures scheme, respectively.
Figs. 2A-2B are schematic illustrations of a one-time signature scheme and a multi-time signature scheme, respectively.
Fig. 3 is a schematic illustration of a signing device and a verifying device, in accordance with some examples.
Fig. 4A is a schematic illustration of a Merkle tree structure, in accordance with some examples.
Fig. 4B is a schematic illustration of a Merkle tree structure, in accordance with some examples.
Fig. 5 is a schematic illustration of a compute blocks in an architecture to implement a signature algorithm, in accordance with some examples.
Fig. 6A is a schematic illustration of a compute blocks in an architecture to implement signature generation in a signature algorithm, in accordance with some examples.
Fig. 6B is a schematic illustration of a compute blocks in an architecture to implement signature verification in a verification algorithm, in accordance with some examples.
Fig. 7 is a schematic illustration of components in an architecture to implement efficient, low-overhead side-channel protection for polynomial multiplication, in accordance with some examples.
Figs. 8A, 8B, and 8C are schematic illustrations of operations in the Saber encryption protocol, in accordance with some examples.
Figs. 8D, 8E, and 8F are schematic illustrations of operations in the Kyber encryption protocol, in accordance with some examples.
Fig. 9 is a schematic illustration of components of an apparatus comprising a polynomial multiplication circuitry which may be used to implement postquantum encryption, in accordance with some examples.
Fig. 10 is a flowchart illustrating operations in a method to implement efficient, low-overhead side-channel protection for polynomial multiplication, in accordance with some examples.
Fig. 11 is a schematic illustration of a computing architecture which may be adapted to implement efficient, low-overhead side-channel protection for polynomial multiplication in accordance with some examples.

### DETAILED DESCRIPTION

Described herein are exemplary systems and methods to implement efficient, low-overhead side-channel protection for polynomial multiplication which may be useful for, among other things, post-quantum cryptography secure hash-based signature algorithms. In the following description, numerous specific details are set forth to provide a thorough understanding of various examples. However, it will be understood by those skilled in the art that the various examples may be practiced without the specific details. In other instances, well-known methods, procedures, components, and circuits have not been illustrated or described in detail so as not to obscure the examples.

### Post-Quantum Cryptography Overview

As described briefly above, existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. The extended Merkle signature scheme (XMSS) and/or an extended Merkle many time signature scheme (XMSS-MT) are hash-based signature schemes that can protect against attacks by quantum computers. As used herein, the term XMSS shall refer to both the XMSS scheme and the XMSS-MT scheme.

An XMSS signature process implements a hash-based signature scheme using a one-time signature scheme such as a Winternitz one-time signature (WOTS) or a derivative there of (e.g., WOTS+) in combination with a secure hash algorithm (SHA) such as SHA2-256 as the primary underlying hash function. In some examples the XMSS signature/verification scheme may also use one or more of SHA2-512, SHA3-SHAKE-256 or SHA3-SHAKE-512 as secure hash functions. XMSS-specific hash functions include a Pseudo-Random Function (PRF), a chain hash (F), a tree hash (H) and message hash function (H_{msg}). As used herein, the term WOTS shall refer to the WOTS signature scheme and or a derivative scheme such as WOTS+.

The Leighton/Micali signature (LMS) scheme is another hash-based signature scheme that uses Leighton/Micali one-time signatures (LM-OTS) as the one-time signature building block. LMS signatures are based on a SHA2-256 hash function.

An XMSS signature process comprises three major operations. The first major operation receives an input message (M) and a private key (sk) and utilizes a one-time signature algorithm (e.g., WOTS+) to generate a message representative (M') that encodes a public key (pk). In a 128-bit post quantum security implementation the input message M is subjected to a hash function and then divided into 67 message components (n bytes each), each of which are subjected to a hash chain function to generate the a corresponding 67 components of the digital signature. Each chain function invokes a series of underlying secure hash algorithms (SHA).

The second major operation is an L-Tree computation, which combines WOTS+ (or WOTS) public key components (n-bytes each) and produces a single n-byte value. For example, in the 128-bit post-quantum security there are 67 public key components, each of which invokes an underlying secure hash algorithm (SHA) that is performed on an input block.

The third major operation is a tree-hash operation, which constructs a Merkle tree. In an XMSS verification, an authentication path that is provided as part of the signature and the output of L-tree operation is processed by a tree-hash operation to generate the root node of the Merkle tree, which should correspond to the XMSS public key. For XMSS verification with 128-bit post-quantum security, traversing the Merkle tree comprises executing secure hash operations. In an XMSS verification, the output of the Tree-hash operation is compared with the known public key. If they match, then the signature is accepted. By contrast, if they do not match then the signature is rejected.

The XMSS signature process is computationally expensive. An XMSS signature process invokes hundreds, or even thousands, of cycles of hash computations. Subject matter described herein addresses these and other issues by providing systems and methods to implement accelerators for post-quantum cryptography secure XMSS and LMS hash-based signing and verification.

Post-Quantum Cryptography (also referred to as "quantum-proof', "quantum-safe", "quantum-resistant", or simply "PQC") takes a futuristic and realistic approach to cryptography. It prepares those responsible for cryptography as well as end-users to know the cryptography is outdated; rather, it needs to evolve to be able to successfully address the evolving computing devices into quantum computing and post-quantum computing.

It is well-understood that cryptography allows for protection of data that is communicated online between individuals and entities and stored using various networks. This communication of data can range from sending and receiving of emails, purchasing of goods or services online, accessing banking or other personal information using websites, etc.

Conventional cryptography and its typical factoring and calculating of difficult mathematical scenarios may not matter when dealing with quantum computing. These mathematical problems, such as discrete logarithm, integer factorization, and elliptic-curve discrete logarithm, etc., are not capable of withstanding an attack from a powerful quantum computer. Although any post-quantum cryptography could be built on the current cryptography, the novel approach would need to be intelligent, fast, and precise enough to resist and defeat any attacks by quantum computers

Today's PQC is mostly focused on the following approaches: 1) hash-based cryptography based on Merkle's hash tree public-key signature system of 1979, which is built upon a one-message-signature idea of Lamport and Diffie; 2) code-based cryptography, such as McEliece's hidden-Goppa-code public-key encryption system; 3) lattice-based cryptography based on Hoffstein-Pipher-Silverman public-key-encryption system of 1998; 4) multivariate-quadratic equations cryptography based on Patarin's HFE public-key-signature system of 1996 that is further based on the Matumoto-Imai proposal; 5) supersingular elliptical curve isogeny cryptography that relies on supersingular elliptic curves and supersingular isogeny graphs; and 6) symmetric key quantum resistance.

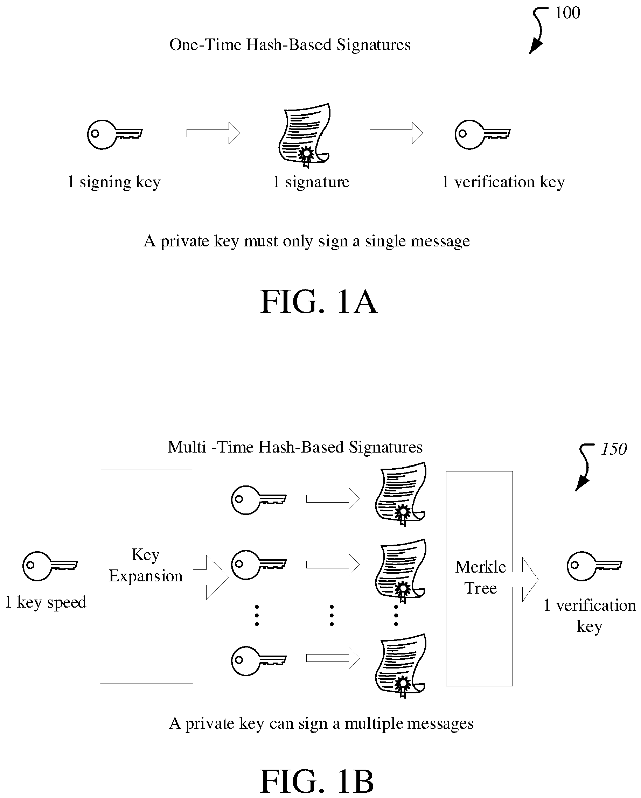

Figures 1A and 1B illustrate a one-time hash-based signatures scheme and a multi-time hash-based signatures scheme, respectively. As aforesaid, hash-based cryptography is based on cryptographic systems like Lamport signatures, Merkle Signatures, extended Merkle signature scheme (XMSS), and SPHINCs scheme, etc. With the advent of quantum computing and in anticipation of its growth, there have been concerns about various challenges that quantum computing could pose and what could be done to counter such challenges using the area of cryptography.

One area that is being explored to counter quantum computing challenges is hash-based signatures (HBS) since these schemes have been around for a long while and possess the necessarily basic ingredients to counter the quantum counting and post-quantum computing challenges. HBS schemes are regarded as fast signature algorithms working with fast platform secured-boot, which is regarded as the most resistant to quantum and post-quantum computing attacks.

For example, as illustrated with respect to Figure 1A, a scheme of HBS is shown that uses Merkle trees along with a one-time signature (OTS) scheme 100, such as using a private key to sign a message and a corresponding public key to verify the OTS message, where a private key only signs a single message.

Similarly, as illustrated with respect to Figure 1B, another HBS scheme is shown, where this one relates to multi-time signatures (MTS) scheme 150, where a private key can sign multiple messages.

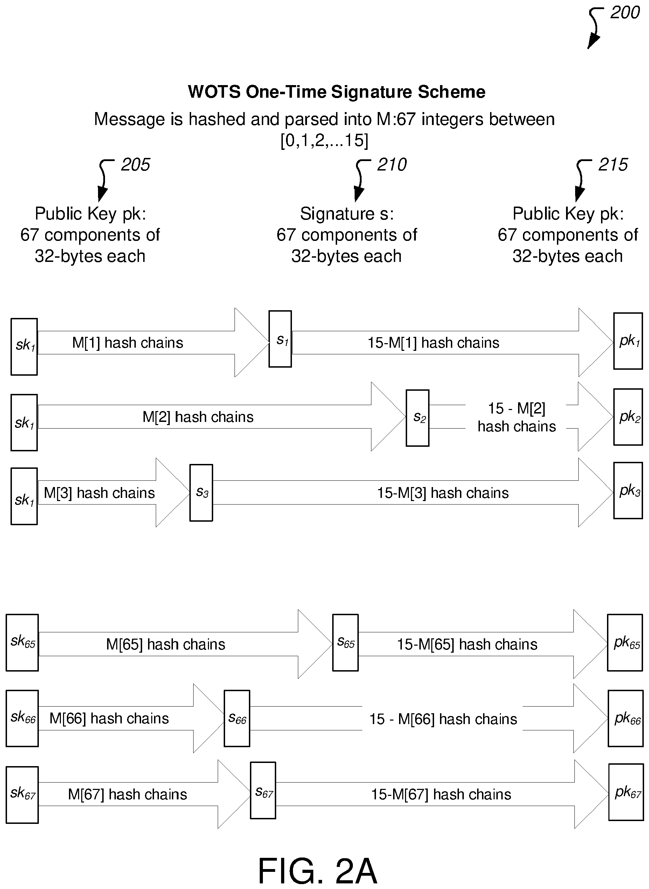

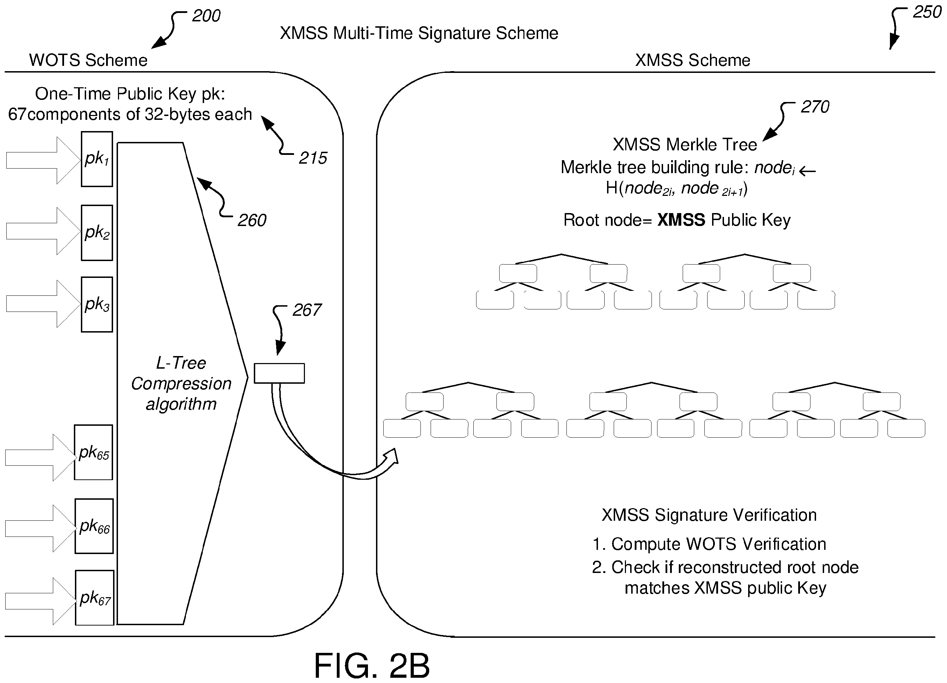

Figures 2A and 2B illustrate a one-time signature scheme and a multi-time signature scheme, respectively. Continuing with HBS-based OTS scheme 100 of Figure 1A and MTS scheme 150 of Figure 1B, Figure 2A illustrates Winternitz OTS scheme 200, which was offered by Robert Winternitz of Stanford Mathematics Department publishing as hw(x) as opposed to h(x)lh(y), while Figure 2B illustrates XMSS MTS scheme 250, respectively.

For example, WOTS scheme 200 of Fig. 2A provides for hashing and parsing of messages into M, with 67 integers between [0, 1, 2, ..., 15], such as private key, sk, 205, signature, s, 210, and public key, pk, 215, with each having 67 components of 32 bytes each.

Fig. 2B illustrates XMSS MTS scheme 250 that allows for a combination of WOTS scheme 200 of Figure 2A and XMSS scheme 255 having XMSS Merkle tree. As discussed previously with respect to Figure 2A, WOTs scheme 200 is based on a one-time public key, pk, 215, having 67 components of 32 bytes each, that is then put through L-Tree compression algorithm 260 to offer WOTS compressed pk 265 to take a place in the XMSS Merkle tree of XMSS scheme 255. It is contemplated that XMSS signature verification may include computing WOTS verification and checking to determine whether a reconstructed root node matches the XMSS public key, such as root node = XMSS public key.

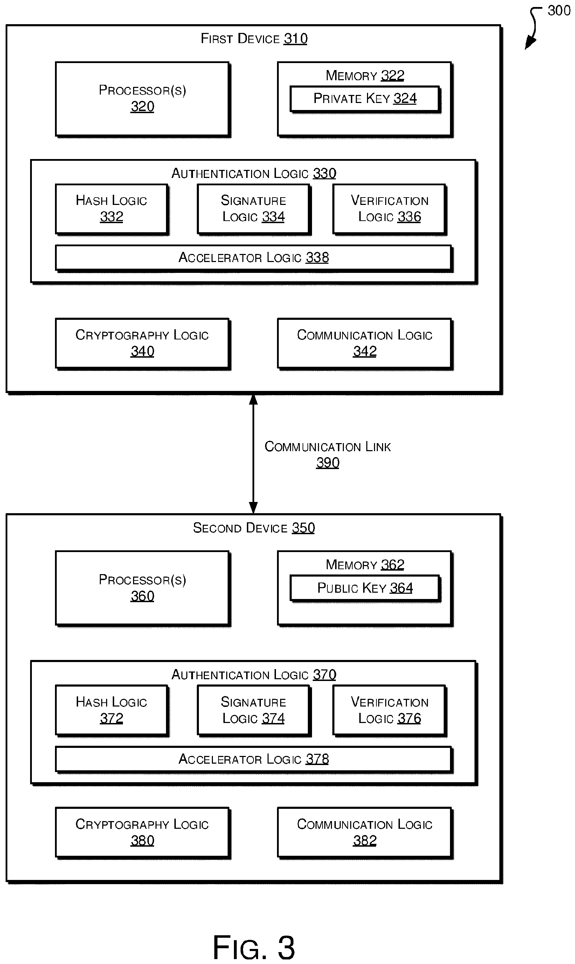

Fig. 3 is a schematic illustration of a high-level architecture of a secure environment 300 that includes a first device 310 and a second device 350, in accordance with some examples. Referring to Fig. 3, each of the first device 310 and the second device 350 may be embodied as any type of computing device capable of performing the functions described herein. For example, in some embodiments, each of the first device 310 and the second device 350 may be embodied as a laptop computer, tablet computer, notebook, netbook, Ultrabook^{™}, a smartphone, cellular phone, wearable computing device, personal digital assistant, mobile Internet device, desktop computer, router, server, workstation, and/or any other computing/communication device.

First device 310 includes one or more processor(s) 320 and a memory 322 to store a private key 324. The processor(s) 320 may be embodied as any type of processor capable of performing the functions described herein. For example, the processor(s) 320 may be embodied as a single or multi-core processor(s), digital signal processor, microcontroller, or other processor or processing and/or controlling circuit. Similarly, the memory 322 may be embodied as any type of volatile or non-volatile memory or data storage capable of performing the functions described herein. In operation, the memory 322 may store various data and software used during operation of the first device 310 such as operating systems, applications, programs, libraries, and drivers. The memory 322 is communicatively coupled to the processor(s) 320. In some examples the private key 324 may reside in a secure memory that may be part memory 322 or may be separate from memory 322.

First device 310 further comprises authentication logic 330 which includes memory 332, signature logic, and verification logic 336. Hash logic 332 is configured to hash (i.e., to apply a hash function to) a message (M) to generate a hash value (m') of the message M. Hash functions may include, but are not limited to, a secure hash function, e.g., secure hash algorithms SHA2-256 and/or SHA3-256, etc. SHA2-256 may comply and/or be compatible with Federal Information Processing Standards (FIPS) Publication 180-4, titled: "Secure Hash Standard (SHS)", published by National Institute of Standards and Technology (NIST) in March 2012, and/or later and/or related versions of this standard. SHA3-256 may comply and/or be compatible with FIPS Publication 202, titled: "SHA-3 Standard: Permutation-Based Hash and Extendable-Output Functions", published by NIST in August 2015, and/or later and/or related versions of this standard.

Signature logic 334 may be configured to generate a signature to be transmitted, i.e., a transmitted signature and/or to verify a signature. In instances in which the first device 310 is the signing device, the transmitted signature may include a number, L, of transmitted signature elements with each transmitted signature element corresponding to a respective message element. For example, for each message element, mi, signature logic 334 may be configured to perform a selected signature operation on each private key element, sₖᵢ of the private key, sₖ, a respective number of times related to a value of each message element, mi included in the message representative m'. For example, signature logic 332 may be configured to apply a selected hash function to a corresponding private key element, sₖᵢ, mi times. In another example, signature logic 332 may be configured to apply a selected chain function (that contains a hash function) to a corresponding private key element, sₖᵢ, mi times. The selected signature operations may, thus, correspond to a selected hash-based signature scheme.

Hash-based signature schemes may include, but are not limited to, a Winternitz (W) one time signature (OTS) scheme, an enhanced Winternitz OTS scheme (e.g., WOTS+), a Merkle many time signature scheme, an extended Merkle signature scheme (XMSS) and/or an extended Merkle multiple tree signature scheme (XMSS-MT), etc. Hash functions may include, but are not limited to SHA2-256 and/or SHA3-256, etc. For example, XMSS and/or XMSS-MT may comply or be compatible with one or more Internet Engineering Task Force (IETF.RTM.) informational draft Internet notes, e.g., draft draft-irtf-cfrg-xmss-hash-based-signatures-00, titled "XMSS: Extended Hash-Based Signatures, released April 2015, by the Internet Research Task Force, Crypto Forum Research Group of the IETF.RTM. and/or later and/or related versions of this informational draft, such as draft draft-irtf cfrg-xmss-hash-based-signatures-06, released June 2016.

Winternitz OTS is configured to generate a signature and to verify a received signature utilizing a hash function. Winternitz OTS is further configured to use the private key and, thus, each private key element, sₖᵢ, one time. For example, Winternitz OTS may be configured to apply a hash function to each private key element, mi or N-mi times to generate a signature and to apply the hash function to each received message element N-mr or m_{i'} times to generate a corresponding verification signature element. The Merkle many time signature scheme is a hash-based signature scheme that utilizes an OTS and may use a public key more than one time. For example, the Merkle signature scheme may utilize Winternitz OTS as the one-time signature scheme. WOTS+ is configured to utilize a family of hash functions and a chain function.

XMSS, WOTS+ and XMSS-MT are examples of hash-based signature schemes that utilize chain functions. Each chain function is configured to encapsulate a number of calls to a hash function and may further perform additional operations. The number of calls to the hash function included in the chain function may be fixed. Chain functions may improve security of an associated hash-based signature scheme. Hash-based signature balancing, as described herein, may similarly balance chain function operations.

Cryptography logic 340 is configured to perform various cryptographic and/or security functions on behalf of the signing device 310. In some embodiments, the cryptography logic 340 may be embodied as a cryptographic engine, an independent security co-processor of the signing device 310, a cryptographic accelerator incorporated into the processor(s) 320, or a standalone software/firmware. In some embodiments, the cryptography logic 340 may generate and/or utilize various cryptographic keys (e.g., symmetric/asymmetric cryptographic keys) to facilitate encryption, decryption, signing, and/or signature verification. Additionally, in some embodiments, the cryptography logic 340 may facilitate to establish a secure connection with remote devices over communication link. It should further be appreciated that, in some embodiments, the cryptography logic 340 and/or another module of the first device 310 may establish a trusted execution environment or secure enclave within which a portion of the data described herein may be stored and/or a number of the functions described herein may be performed.

After the signature is generated as described above, the message, M, and signature may then be sent by first device 310, e.g., via communication logic 342, to second device 350 via network communication link 390. In an embodiment, the message, M, may not be encrypted prior to transmission. In another embodiment, the message, M, may be encrypted prior to transmission. For example, the message, M, may be encrypted by cryptography logic 340 to produce an encrypted message.

Second device 350 may also include one or more processors 360 and a memory 362 to store a public key 364. As described above, the processor(s) 360 may be embodied as any type of processor capable of performing the functions described herein. For example, the processor(s) 360 may be embodied as a single or multi-core processor(s), digital signal processor, microcontroller, or other processor or processing/controlling circuit. Similarly, the memory 362 may be embodied as any type of volatile or non-volatile memory or data storage capable of performing the functions described herein. In operation, the memory 362 may store various data and software used during operation of the second device 350 such as operating systems, applications, programs, libraries, and drivers. The memory 362 is communicatively coupled to the processor(s) 360.

In some examples the public key 364 may be provided to verifier device 350 in a previous exchange. The public key, pₖ, is configured to contain a number L of public key elements, i.e., pₖ=[pₖ₁, ..., p_{kL}]. The public key 364 may be stored, for example, to memory 362.

Second device 350 further comprises authentication logic 370 which includes hash logic 372, signature logic, and verification logic 376. As described above, hash logic 372 is configured to hash (i.e., to apply a hash function to) a message (M) to generate a hash message (m'). Hash functions may include, but are not limited to, a secure hash function, e.g., secure hash algorithms SHA2-256 and/or SHA3-256, etc. SHA2-256 may comply and/or be compatible with Federal Information Processing Standards (FIPS) Publication 180-4, titled: "Secure Hash Standard (SHS)", published by National Institute of Standards and Technology (NIST) in March 2012, and/or later and/or related versions of this standard. SHA3-256 may comply and/or be compatible with FIPS Publication 202, titled: "SHA-3 Standard: Permutation-Based Hash and Extendable-Output Functions", published by NIST in August 2015, and/or later and/or related versions of this standard.

In instances in which the second device is the verifying device, authentication logic 370 is configured to generate a verification signature based, at least in part, on the signature received from the first device and based, at least in part, on the received message representative (m'). For example, authentication logic 370 may configured to perform the same signature operations, i.e., apply the same hash function or chain function as applied by hash logic 332 of authentication logic 330, to each received message element a number, N-mᵢ' (or mᵢ'), times to yield a verification message element. Whether a verification signature, i.e., each of the L verification message elements, corresponds to a corresponding public key element, pₖᵢ, may then be determined. For example, verification logic 370 may be configured to compare each verification message element to the corresponding public key element, pₖᵢ. If each of the verification message element matches the corresponding public key element, pₖᵢ, then the verification corresponds to success. In other words, if all of the verification message elements match the public key elements, pₖ₁, ... , p_{kL}, then the verification corresponds to success. If any verification message element does not match the corresponding public key element, pₖᵢ, then the verification corresponds to failure.

As described in greater detail below, in some examples the authentication logic 330 of the first device 310 includes one or more accelerator logic 338 that cooperate with the hash logic 332, signature logic 334 and/or verification logic 336 to accelerate authentication operations. Similarly, in some examples the authentication logic 370 of the second device 310 includes one or more accelerator logic 378 that cooperate with the hash logic 372, signature logic 374 and/or verification logic 376 to accelerate authentication operations.. Examples of accelerators are described in the following paragraphs and with reference to the accompanying drawings.

The various modules of the environment 300 may be embodied as hardware, software, firmware, or a combination thereof. For example, the various modules, logic, and other components of the environment 300 may form a portion of, or otherwise be established by, the processor(s) 320 of first device 310 or processor(s) 360 of second device 350, or other hardware components of the devices As such, in some embodiments, one or more of the modules of the environment 300 may be embodied as circuitry or collection of electrical devices (e.g., an authentication circuitry, a cryptography circuitry, a communication circuitry, a signature circuitry, and/or a verification circuitry). Additionally, in some embodiments, one or more of the illustrative modules may form a portion of another module and/or one or more of the illustrative modules may be independent of one another.

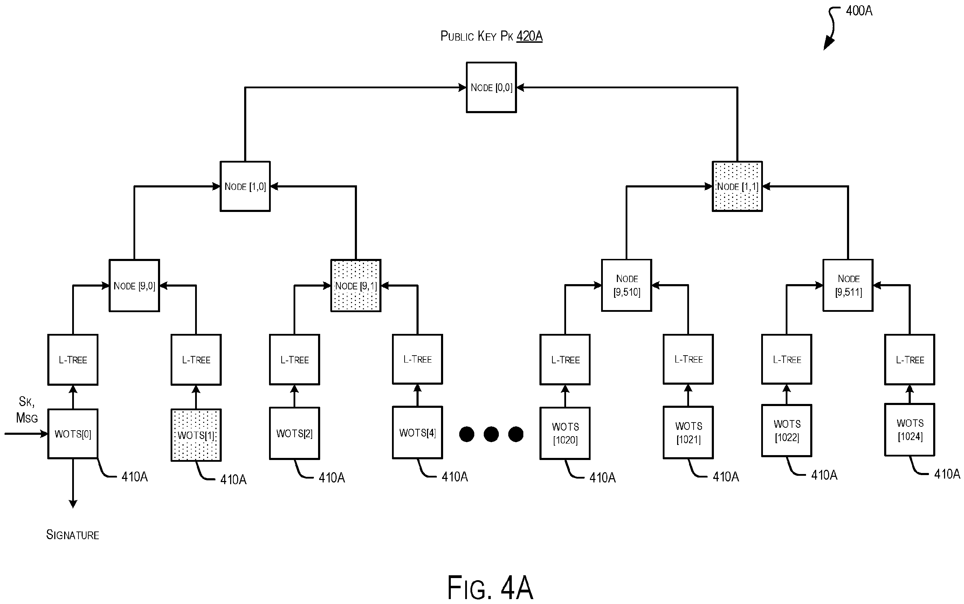

Fig. 4A is a schematic illustration of a Merkle tree structure illustrating signing operations, in accordance with some examples. Referring to Fig. 4A, an XMSS signing operation requires the construction of a Merkle tree 400A using the local public key from each leaf WOTS node 410 to generate a global public key (PK) 420. In some examples the authentication path and the root node value can be computed off-line such that these operations do not limit performance. Each WOTS node 410 has a unique secret key, "sk" which is used to sign a message only once. The XMSS signature consists of a signature generated for the input message and an authentication path of intermediate tree nodes to construct the root of the Merkle tree.

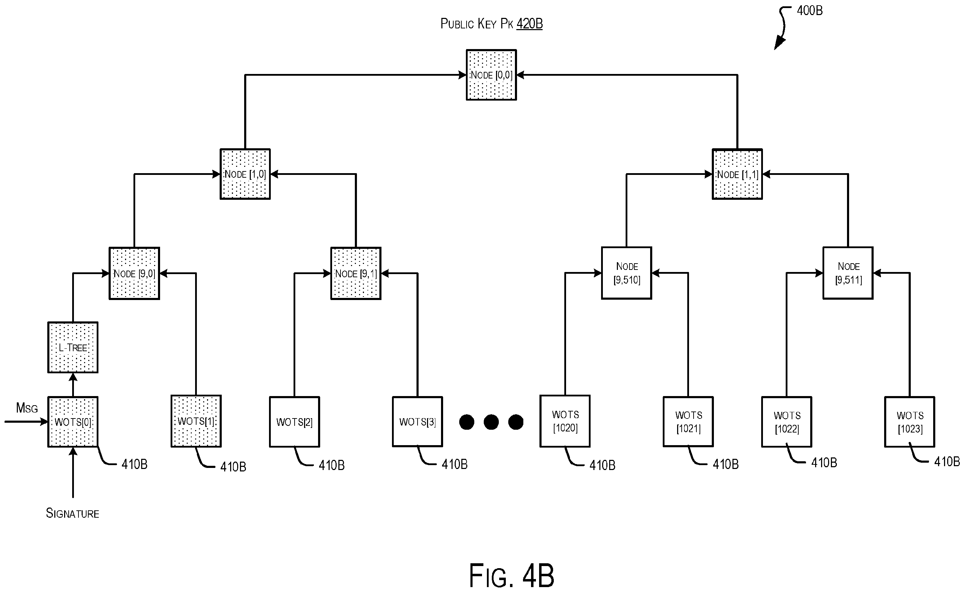

Fig. 4B is a schematic illustration of a Merkle tree structure 400B during verification, in accordance with some examples. During verification, the input message and signature are used to compute the local public key 420B of the WOTS node, which is further used to compute the tree root value using the authentication path. A successful verification will match the computed tree root value to the public key PK shared by the signing entity. The WOTS and L-Tree operations constitute on a significant portion of XMSS sign/verify latency respectively, thus defining the overall performance of the authentication system. Described herein are various pre-computation techniques which may be implemented to speed-up WOTS and L-Tree operations, thereby improving XMSS performance. The techniques are applicable to the other hash options and scale well for both software and hardware implementations.

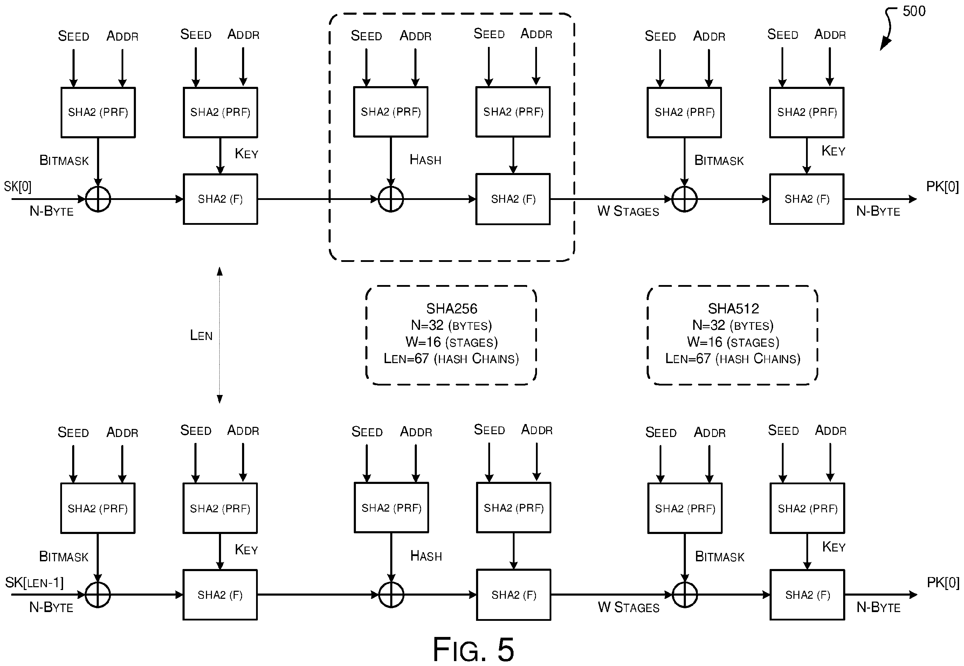

Fig. 5 is a schematic illustration of a compute blocks in an architecture 500 to implement a signature algorithm, in accordance with some examples. Referring to Fig. 5, the WOTS+ operation involves 67 parallel chains of 16 SHA2-256 HASH functions, each with the secret key sk[66:0] as input. Each HASH operation in the chain consists of 2 pseudo-random functions (PRF) using SHA2-256 to generate a bitmask and a key. The bitmask is XOR-ed with the previous hash and concatenated with the key as input message to a 3rd SHA2-256 hash operation. The 67×32-byte WOTS public key pk[66:0] is generated by hashing secret key sk across the 67 hash chains.

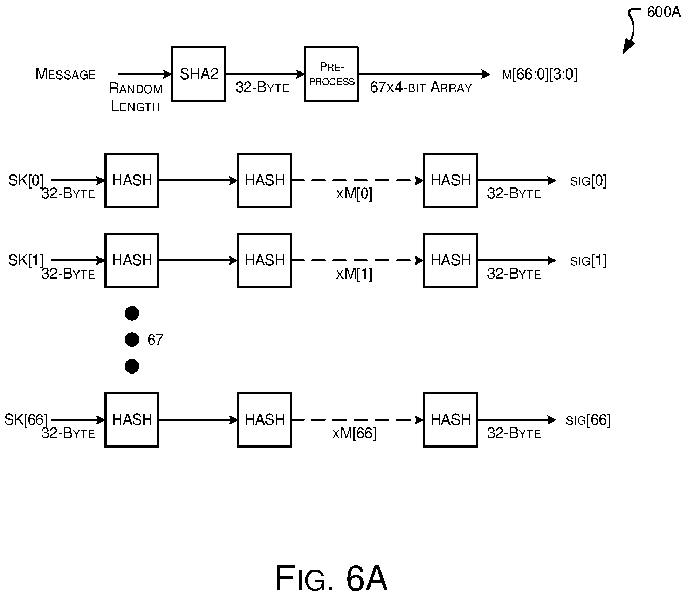

Fig. 6A is a schematic illustration of a compute blocks in an architecture 600A to implement signature generation in a signature algorithm, in accordance with some examples. As illustrated in Fig. 6A, for message signing, the input message is hashed and pre-processed to compute a 67×4-bit value, which is used as an index to choose an intermediate hash value in each chain.

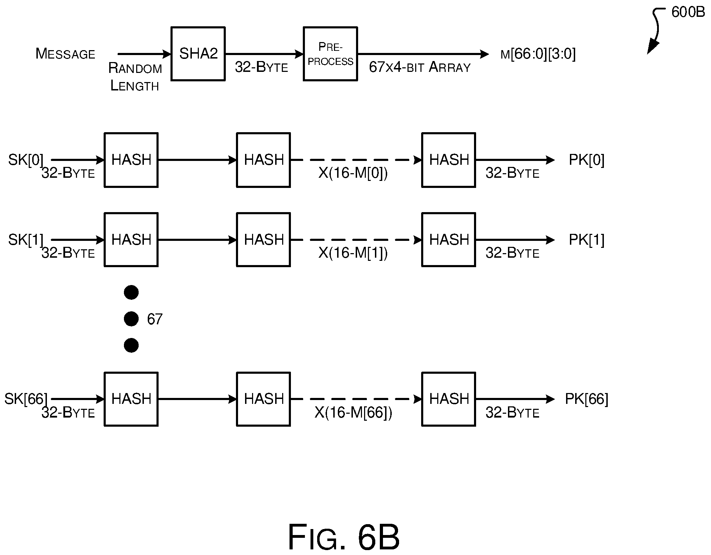

Fig. 6B is a schematic illustration of a compute blocks in an architecture 600B to implement signature verification in a verification algorithm, in accordance with some examples. Referring to Fig. 6B, during verification, the message is again hashed to compute the signature indices and compute the remaining HASH operations in each chain to compute the WOTS public key pk. This value and the authentication path are used to compute the root of the Merkle tree and compare with the shared public key PK to verify the message.

### Efficient Low-Overhead Side-channel Protection for Polynomial Multiplication in Post-Quantum Encryption

As described above, existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. As a result, there are efforts underway in the cryptography research community and in various standards bodies to define new standards for algorithms that are secure against quantum computers. Broadly, the various standards may be referred to as Advanced Encryption Standards (AES) encryption standards.

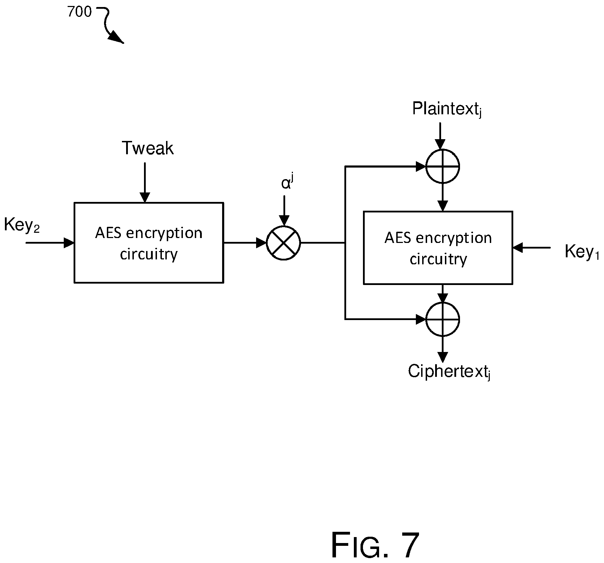

Fig. 7 is a schematic, high-level illustration of components in an architecture 700 to implement AES encryption, in accordance with some examples. Referring to Fig. 7, in some examples, AES encryption mode uses two keys, where a first key (key1) is used by the underlying AES encryption/decryption circuitry block. The other key (key2) is used to encrypt a tweak value. In various examples the encrypted tweak may be further modified by a Galois polynomial function and is XORed with the input plaintext and the output ciphertext.

To achieve secure communication, communication protocols like transport layer security (TLS) and media access control security (MACSec) need fast encryption and decryption. Many post-quantum resilient encryption techniques rely on polynomial multiplication of degree 256 polynomials. In some examples, a polynomial multiplication circuitry may leak information about a private key through power and/or electromagnetic side signatures during both encryption and decryption operations. Side-channel attacks exploit such leakage of electronic circuits to extract embedded secret keys. The leakage information can be in the form of power consumption, electromagnetic (EM) emanations, timing information, etc. An attacker can exploit this leakage information to construct statistical models, that can emulate the switching activities of internal nodes in a cryptographic engine. Because the switching activity is highly correlated to power consumption, a correct key guess will yield correlation peaks, thereby revealing the key byte. Similar methods can be repeated for the other key bytes. Once a sufficient number of key bytes are extracted using side-channel attack techniques, brute-force attacks can be carried out to extract the entire key of the underlying cryptographic block. Existing techniques to provide side-channel protection to multiplication operations, e.g., masking, incur significant computation and power consumption overhead, significantly affecting the execution time required to implement post-quantum encryption operations.

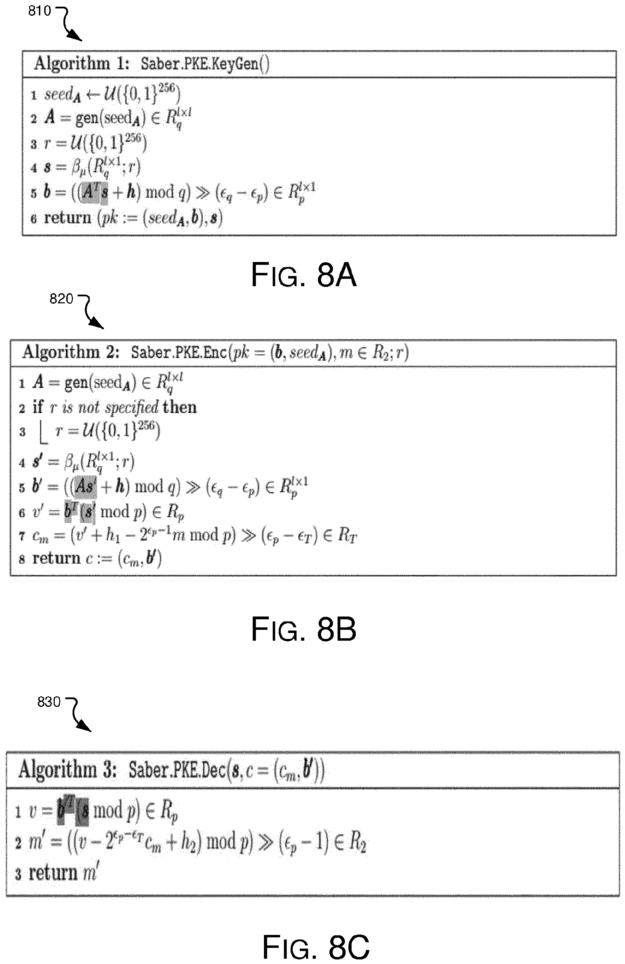

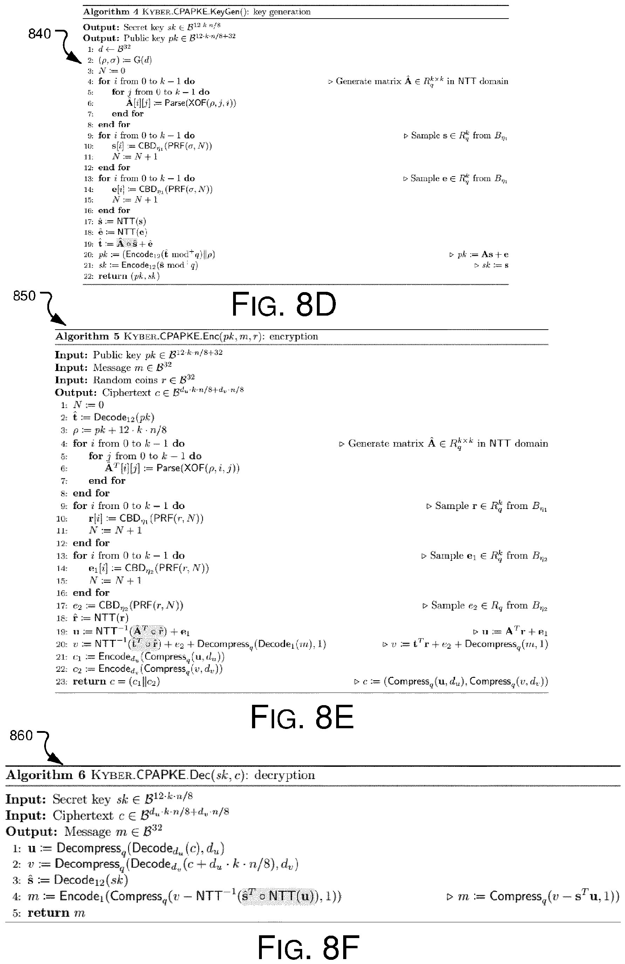

Figs. 8A, 8B, and 8C are schematic illustrations of operations in the Saber encryption protocol, in accordance with some examples. Similarly, Figs. 8D, 8E, and 8F are schematic illustrations of operations in the Kyber encryption protocol, in accordance with some examples. In many post-quantum encryption based protocols, such as Saber and Kyber, the secret polynomials used in encryption are often multiplied by a public polynomial that is deterministically generated by a seed. Referring to Fig. 8A and Fig 8B, in Saber; and equivalently to Fig. 8D and Fig. 8E, in Kyber, during the respective key generation algorithms 810, 840 and the respective encryption processes 820, 850 the secret (s) is multiplied by the polynomials in A that are generated by the gen function based on the input seed (seed_{A}). Thus, an attacker may affect the initial seed (seed_{A}), but cannot alter individual coefficients of the public polynomials. This prevents an attacker from mounting elaborate differential power analysis (DPA) and/or chosen plaintext attacks (CPA) attacks. In these circumstances, shuffling-only countermeasures provide sufficient security. Referring to Fig. 8C, during decryption using the respective decryption algorithms 830, 860 an attacker may affect the individual coefficients of the public polynomial, which may require more aggressive security measures.

Subject matter described herein addresses these and other issues by providing a polynomial multiplication circuitry which may be configured to operate in one of multiple different security modes which different levels of side-channel protection. A control signal may be applied to set the security mode in which the polynomial multiplication circuitry operates. In some examples the control signal may be set as a function of the amount of protection useful to secure elements of the calculations during the encryption and/or decryption process. For example, processes that can expose elements of a secret polynomial may be processed at a higher security mode, while processes that do not expose elements of a secret polynomial may be processed in a lower security mode. Similarly, a security mode in which no side channel protection is provided may be used, e.g., in secure environments in which side channel protection is not a concern.

In some examples a configurable hardware module may be implemented that can increase or decrease the level of side-channel protection (and consequentially the performance overhead) based on the security needs associated with different use cases. In one example a polynomial multiplication circuitry may provide four different levels of security. A first level provides no side-channel protection, which incurs no overhead (e.g., 1x overhead). A second level provides only a shuffling-based protection, which incurs approximately a 1.13x overhead. A third level provides a combination of masking and/or polynomial splitting protection, which incurs approximately a 2x overhead. A fourth level provides a combination of masking and shuffling, which incurs approximately a 2.13x overhead.

Using configurable hardware, security countermeasures can be matched to the capabilities of the attacker at each stage of the process. For instance, during the KeyGen process in Saber and Kyber, the secret polynomial is only multiplied to a public vector that the attacker can randomly change but without affecting individual coefficients. In such cases (which make up the majority of multiplications), shuffling only protection provides sufficient security. Thus, a protection strategy may be implemented that uses heavyweight protection when needed, but scales back to lighter weight countermeasures (e.g., shuffling) when the attacker's abilities are more constrained by the protocol specification. This enables implementation of a low overhead solution that achieves appropriate security levels to protect the post-quantum cryptography key encapsulation mechanism (PQC KEMS) against timing, power, EM and photonic side-channel attacks.

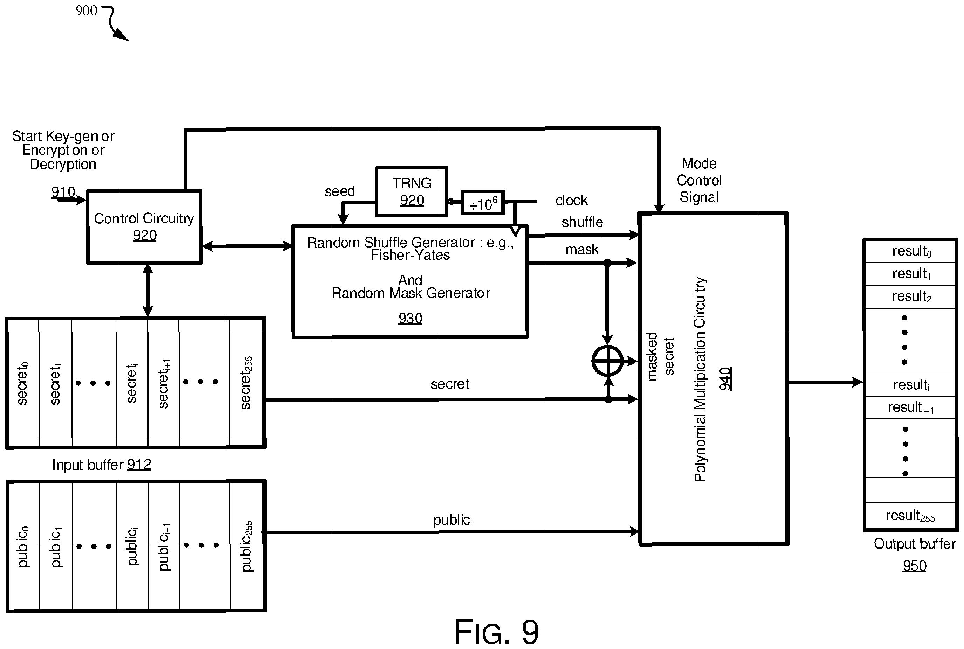

Fig. 9 is a schematic illustration of components of an apparatus 900 comprising a polynomial multiplication circuitry which may be used to implement postquantum encryption, in accordance with some examples. Referring to Fig. 9, in some examples the apparatus 900 comprises control circuitry 920 comprising a first input node to receive a control input signal 910 and a second input node to receives a secret and/or a public from a input buffer 912. Apparatus 900 further comprises a random shuffle generator and a random mask generator 930 and a hardware-based true random number generator (TRNG) 920.

In operation, secret polynomial may be loaded into the input buffer 912, followed by assertion of a start encryption input signal 910. In some examples, the control circuitry 910 then retrieves a secret element (also known as a secret coefficient of the polynomial) from the input buffer 912 and feeds it to the polynomial multiplication circuitry 940. Control circuitry 920 receives a command to indicate whether the current operation is for key-gen, encryption or decryption of Saber or Kyber. While operating in the side-channel resistant mode that implements masking, the secret is added with a random mask generated by random generator circuit 930 and sent to polynomial multiplication circuitry 940. The final result is written to the output buffer 950.

Switching between the four modes of operation is determined by a mode control signal generated by the control circuitry 920. As described briefly above, when the apparatus 900 may be operated in one of a first level which provides no side-channel protection, which incurs no overhead (e.g., 1x overhead), a second level which provides only a shuffling-based protection, which incurs approximately a 1.13x overhead, a third level which provides a combination of masking and/or polynomial splitting protection, which incurs approximately a 2x overhead, or a fourth level which provides a combination of masking and shuffling, which incurs approximately a 2.13x overhead.

In some examples the mode control signal may be determined by the specific process and/or operating conditions of a computing environment in which the apparatus 900 operates. For example, in a secured computing environment in which no side-channel protection is required the control circuitry 920 may generate a mode control signal with a first value. In a circumstance in which the apparatus is performing a key generation operation or an encryption operation, e.g., for Saber, the control circuitry 920 may generate a mode control signal with a second value. In a circumstance in which the apparatus is performing a forward number theoretic transform (NTT) operation the control circuitry 920 may generate a control signal with a third value. In a circumstance in which the apparatus is performing a decryption operation or an inverse NTT operation the control circuitry 920 may generate a mode control signal with a fourth value.

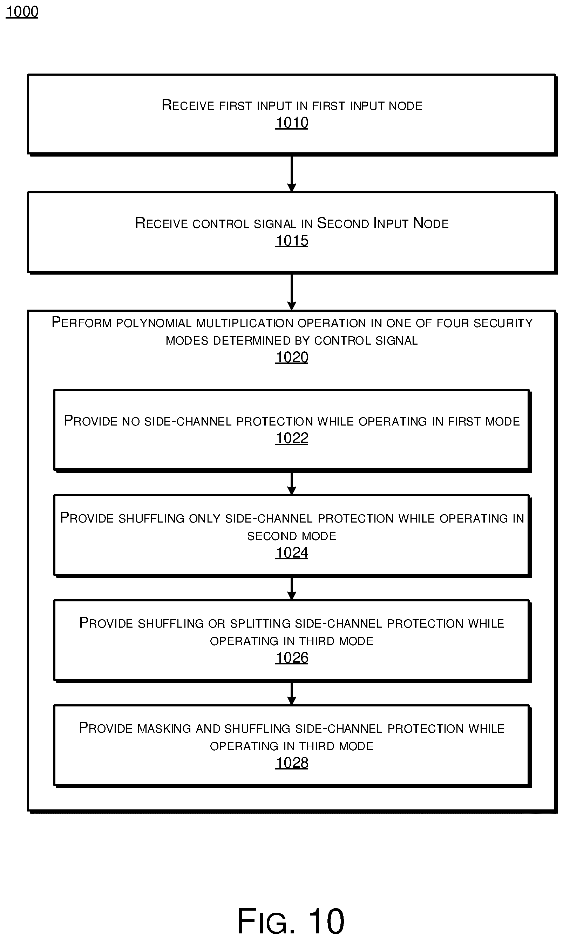

Fig. 10 is a flowchart illustrating operations in a method to implement efficient, low-overhead side-channel protection for polynomial multiplication, in accordance with some examples. Referring to Fig. 10, at operation 1010 a first input is received in a fist input node. In some examples the first input may comprise one or more input polynomials for a polynomial multiplication operation. At operation 1015 a control signal is received in a second input node. In some examples the control signal may comprise a mode control signal generated by the control circuitry 920 depicted in Fig. 9 which may comprise one or more values indicative of a security level to be provided by the apparatus depicted in Fig. 9 when performing polynomial multiplications. In some examples the control signal may be determined, at least in part, by the specific process and/or operating conditions of a computing environment in which the apparatus 900 operates.

At operation 1020 a polynomial multiplication operation is performed in one of four security modes determined by the control signal. For example, at operation 1022 a polynomial multiplication operation is performed with no side channel protection in response to the control signal indicating operation is to be in the first security mode. This may be appropriate in circumstances in which the polynomial multiplication is being performed in a secure computing environment such that side channel attacks are not a concern.

At operation 1024 a polynomial multiplication operation is performed with only shuffling as a side channel protection in response to the control signal indicating operation is to be in the second security mode. This may be appropriate in circumstances in which the polynomial multiplication operation is being performed as part of a key generation process or an encryption process as part of a forward NTT calculation, coefficient-wise multiplication and inverse-NTT calculation. In some examples, an optimized Fisher-Yates random number generator may be used to generate a random shuffle and apply it to the 64 independent operations that are computed during polynomial multiplication. It may be considered that the NTT circuit consists of two butterfly operation units which can run in parallel. For Saber and Kyber the polynomials consist of 256 elements and in NTT there are 8 and 7 phases, respectively. Each phase involves 128 multiplications which can be computed in 64 iterations on 2 butterfly units. Therefore, a 64 random shuffle may be implemented as described above for Fisher-Yates.

At operation 1026 a polynomial multiplication operation is performed with masking or polynomial splitting as a side channel protection in response to the control signal indicating operation is to be in the third security mode. This may be appropriate in circumstances in which the polynomial multiplication operation is being performed as part of a decryption process in Saber and Kyber, as indicated above. In some examples a higher level of protection is used during the decryption of both Kyber and Saber. This is because the input ciphertext is being multiplied with the long-term private key of the receiver. The network attacker in this case may try to modify the ciphertext and send it to the receiver for multiple times to collect multiple power or EM side-channel traces.

At operation 1028 a polynomial multiplication operation is performed with masking and shuffling as a side channel protection in response to the control signal indicating operation is to be in the fourth security mode. This may be appropriate to achieve the highest level of side-channel protections in circumstances in which the polynomial multiplication operation is being performed as part of a decryption process in Saber and Kyber as indicated above.

The operations of Fig. 10 may be repeated each time an input polynomial is received for a multiplication operation, thus ensuring than an appropriate level of side channel protection is applied to the specific multiplication operation.

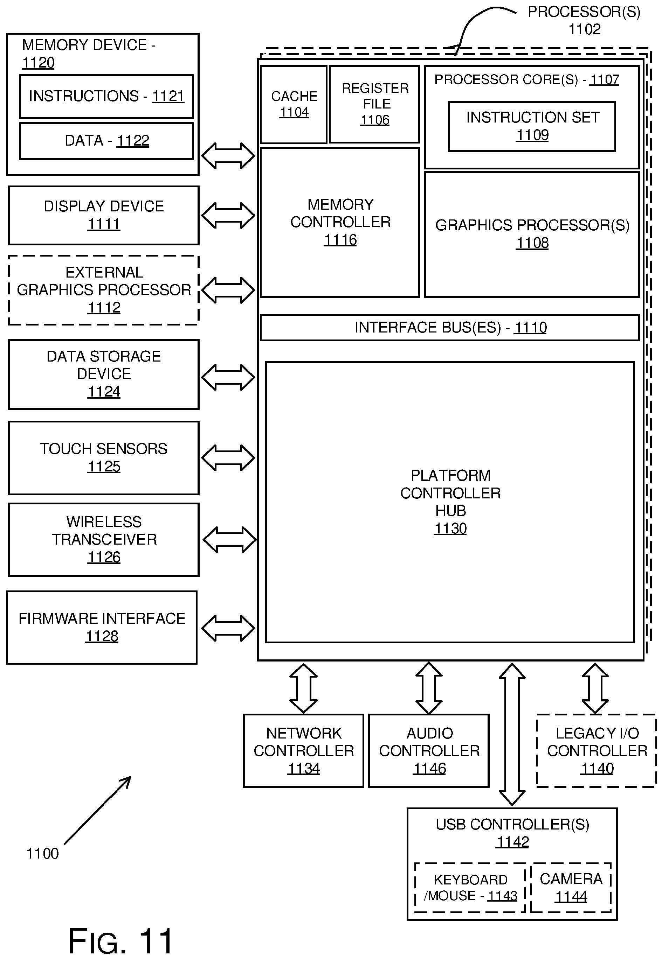

Fig. 11 illustrates an embodiment of an exemplary computing architecture that may be suitable for implementing various embodiments as previously described. In various embodiments, the computing architecture 1100 may comprise or be implemented as part of an electronic device. In some embodiments, the computing architecture 1100 may be representative, for example of a computer system that implements one or more components of the operating environments described above. In some embodiments, computing architecture 1100 may be representative of one or more portions or components of a DNN training system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 1100. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 1100 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 1100.

As shown in Figure 11, the computing architecture 1100 includes one or more processors 1102 and one or more graphics processors 1108, and may be a single processor desktop system, a multiprocessor workstation system, or a server system having a large number of processors 1102 or processor cores 1107. In on embodiment, the system 1100 is a processing platform incorporated within a system-on-a-chip (SoC or SOC) integrated circuit for use in mobile, handheld, or embedded devices.

An embodiment of system 1100 can include, or be incorporated within, a server-based gaming platform, a game console, including a game and media console, a mobile gaming console, a handheld game console, or an online game console. In some embodiments system 1100 is a mobile phone, smart phone, tablet computing device or mobile Internet device. Data processing system 1100 can also include, couple with, or be integrated within a wearable device, such as a smart watch wearable device, smart eyewear device, augmented reality device, or virtual reality device. In some embodiments, data processing system 1100 is a television or set top box device having one or more processors 1102 and a graphical interface generated by one or more graphics processors 1108.

In some embodiments, the one or more processors 1102 each include one or more processor cores 1107 to process instructions which, when executed, perform operations for system and user software. In some embodiments, each of the one or more processor cores 1107 is configured to process a specific instruction set 1109. In some embodiments, instruction set 1109 may facilitate Complex Instruction Set Computing (CISC), Reduced Instruction Set Computing (RISC), or computing via a Very Long Instruction Word (VLIW). Multiple processor cores 1107 may each process a different instruction set 1109, which may include instructions to facilitate the emulation of other instruction sets. Processor core 1107 may also include other processing devices, such a Digital Signal Processor (DSP).

In some embodiments, the processor 1102 includes cache memory 1104. Depending on the architecture, the processor 1102 can have a single internal cache or multiple levels of internal cache. In some embodiments, the cache memory is shared among various components of the processor 1102. In some embodiments, the processor 1102 also uses an external cache (e.g., a Level-3 (L3) cache or Last Level Cache (LLC)) (not shown), which may be shared among processor cores 1107 using known cache coherency techniques. A register file 1106 is additionally included in processor 1102 which may include different types of registers for storing different types of data (e.g., integer registers, floating point registers, status registers, and an instruction pointer register). Some registers may be general-purpose registers, while other registers may be specific to the design of the processor 1102.

In some embodiments, one or more processor(s) 1102 are coupled with one or more interface bus(es) 1110 to transmit communication signals such as address, data, or control signals between processor 1102 and other components in the system. The interface bus 1110, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 1102 include an integrated memory controller 1116 and a platform controller hub 1130. The memory controller 1116 facilitates communication between a memory device and other components of the system 1100, while the platform controller hub (PCH) 1130 provides connections to I/O devices via a local I/O bus.

Memory device 1120 can be a dynamic random-access memory (DRAM) device, a static random-access memory (SRAM) device, flash memory device, phase-change memory device, or some other memory device having suitable performance to serve as process memory. In one embodiment the memory device 1120 can operate as system memory for the system 1100, to store data 1122 and instructions 1121 for use when the one or more processors 1102 executes an application or process. Memory controller hub 1116 also couples with an optional external graphics processor 1112, which may communicate with the one or more graphics processors 1108 in processors 1102 to perform graphics and media operations. In some embodiments a display device 1111 can connect to the processor(s) 1102. The display device 1111 can be one or more of an internal display device, as in a mobile electronic device or a laptop device or an external display device attached via a display interface (e.g., DisplayPort, etc.). In one embodiment the display device 1111 can be a head mounted display (HMD) such as a stereoscopic display device for use in virtual reality (VR) applications or augmented reality (AR) applications.

In some embodiments the platform controller hub 1130 enables peripherals to connect to memory device 1120 and processor 1102 via a high-speed I/O bus. The I/O peripherals include, but are not limited to, an audio controller 1146, a network controller 1134, a firmware interface 1128, a wireless transceiver 1126, touch sensors 1125, a data storage device 1124 (e.g., hard disk drive, flash memory, etc.). The data storage device 1124 can connect via a storage interface (e.g., SATA) or via a peripheral bus, such as a Peripheral Component Interconnect bus (e.g., PCI, PCI Express). The touch sensors 1125 can include touch screen sensors, pressure sensors, or fingerprint sensors. The wireless transceiver 1126 can be a Wi-Fi transceiver, a Bluetooth transceiver, or a mobile network transceiver such as a 3G, 4G, or Long Term Evolution (LTE) transceiver. The firmware interface 1128 enables communication with system firmware, and can be, for example, a unified extensible firmware interface (UEFI). The network controller 1134 can enable a network connection to a wired network. In some embodiments, a high-performance network controller (not shown) couples with the interface bus 1110. The audio controller 1146, in one embodiment, is a multi-channel high definition audio controller. In one embodiment the system 1100 includes an optional legacy I/O controller 1140 for coupling legacy (e.g., Personal System 2 (PS/2)) devices to the system. The platform controller hub 1130 can also connect to one or more Universal Serial Bus (USB) controllers 1142 connect input devices, such as keyboard and mouse 1143 combinations, a camera 1144, or other USB input devices.

The following pertains to further examples.

Example 1 is an apparatus, comprisinga first input node to receive a first input; a second input node to receive a control signal; a polynomial multiplication circuitry to perform a polynomial multiplication operation using the first input and in a security mode determined by the control signal, the security mode comprising one of a first mode in which no side-channel protection is provided to the polynomial multiplication operation; a second mode in which a shuffling-based side-channel protection is provided to the polynomial multiplication operation; a third mode in which a masking or splitting side-channel protection is provided to the polynomial multiplication operation; or a fourth mode in which a masking and shuffling based side-channel protection is provided to the polynomial multiplication operation.

In Example 2, the subject matter of Example 1 can optionally include an arrangement wherein the polynomial multiplication circuitry is to operate in the first mode in response to a detection of a computing environment in which side-channel protection is not required.

In Example 3, the subject matter of any one of Examples 1-2 can optionally include an arrangement wherein the polynomial multiplication circuitry is to operate in the second mode in response to an initiation of at least one of an encryption key generation process or an encryption process.

In Example 4, the subject matter of any one of Examples 1-3 can optionally include an arrangement wherein the polynomial multiplication circuitry comprises a random number generator to produce a random shuffle order and to apply the random shuffle order to operations computed during the at least one of a key generation process or an encryption process.

In Example 5, the subject matter of any one of Examples 1-4 can optionally include an arrangement wherein the polynomial multiplication circuitry is to operate in the third mode in response to an initiation of a coefficient-wise multiplication process during decryption of Saber and Kyber.

In Example 6, the subject matter of any one of Examples 1-5 can optionally include an arrangement wherein the polynomial multiplication circuitry is to operate in the fourth mode in response to an initiation of a coefficient-wise multiplication and an inverse (NTT) polynomial multiplication process during Saber or Kyber decryption.

In Example 7, the subject matter of any one of Examples 1-6 can optionally include an arrangement wherein the polynomial multiplication circuitry is to split a polynomial before implementing the polynomial multiplication process in the third and the fourth modes.

Example 8 is a method, comprising receiving a first input in a first input node; receiving a control signal in a second input node; performing, in a polynomial multiplication circuitry, a polynomial multiplication operation using the first input in a security mode determined by the control signal, the security mode comprising one of a first mode in which no side-channel protection is provided to the polynomial multiplication operation; a second mode in which a shuffling-based side-channel protection is provided to the polynomial multiplication operation; a third mode in which a masking or splitting side-channel protection is provided to the polynomial multiplication operation; or a fourth mode in which a masking and shuffling based side-channel protection is provided to the polynomial multiplication operation.

In Example 9, the subject matter of any Example 8 can optionally include an arrangement wherein the polynomial multiplication circuitry is to operate in the first mode in response to a detection of a computing environment in which side-channel protection is not required.

In Example 10, the subject matter of any one of Examples 8-9 can optionally include an arrangement wherein the polynomial multiplication circuitry is to operate in the second mode in response to an initiation of at least one of an encryption key generation process or an encryption process.

In Example 11, the subject matter of any one of Examples 8-10 can optionally include an arrangement wherein the polynomial multiplication circuitry comprises a random number generator to produce a random shuffle order and to apply the random shuffle order to operations computed during the at least one of a key generation process or an encryption process.

In Example 12, the subject matter of any one of Examples 8-11 can optionally include an arrangement wherein the polynomial multiplication circuitry is to operate in the third mode in response to an initiation of a coefficient-wise multiplication process during decryption of Saber and Kyber.

In Example 13, the subject matter of any one of Examples 8-12 can optionally include an arrangement wherein the polynomial multiplication circuitry is to operate in the fourth mode in response to an initiation of a coefficient-wise multiplication and an inverse (NTT) polynomial multiplication process during Saber or Kyber decryption.

In Example 14, the subject matter of any one of Examples 8-13 can optionally include an arrangement wherein the polynomial multiplication circuitry is to split a polynomial before implementing the polynomial multiplication process in the third and the fourth modes.

Example 15 is a non-transient computer readable medium comprising instructions which, when executed by a processor, configure the processor to perform operations comprising receiving a first input in a first input node; receiving a control signal in a second input node; performing, in a polynomial multiplication circuitry, a polynomial multiplication operation using the first input in a security mode determined by the control signal, the security mode comprising one of a first mode in which no side-channel protection is provided to the polynomial multiplication operation; a second mode in which a shuffling-based side-channel protection is provided to the polynomial multiplication operation; a third mode in which a masking or splitting side-channel protection is provided to the polynomial multiplication operation; or a fourth mode in which a masking and shuffling based side-channel protection is provided to the polynomial multiplication operation.

In Example 16, the subject matter of any Examples 15 can optionally include an arrangement wherein the polynomial multiplication circuitry is to operate in the first mode in response to a detection of a computing environment in which side-channel protection is not required.

In Example 17, the subject matter of any one of Examples 15-16 can optionally include an arrangement wherein the polynomial multiplication circuitry is to operate in the second mode in response to an initiation of at least one of an encryption key generation process or an encryption process.

In Example 18, the subject matter of any one of Examples 15-17 can optionally include an arrangement wherein the polynomial multiplication circuitry comprises a random number generator to produce a random shuffle order and to apply the random shuffle order to operations computed during the at least one of a key generation process or an encryption process.

In Example 19, the subject matter of any one of Examples 15-18 can optionally include an arrangement wherein the polynomial multiplication circuitry is to operate in the third mode in response to an initiation of a coefficient-wise multiplication process during decryption of Saber and Kyber.

In Example 20, the subject matter of any one of Examples 15-19 can optionally include an arrangement wherein the polynomial multiplication circuitry is to operate in the fourth mode in response to an initiation of a coefficient-wise multiplication and an inverse (NTT) polynomial multiplication process during Saber or Kyber decryption.

In Example 21, the subject matter of any one of Examples 15-20 can optionally include an arrangement wherein the polynomial multiplication circuitry is to split a polynomial before implementing the polynomial multiplication process in the third and the fourth modes.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In addition "a set of" includes one or more elements. In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," etc. are used merely as labels, and are not intended to suggest a numerical order for their objects.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims, along with the full scope of equivalents to which such claims are entitled.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising:
a first input node to receive a first input;
a second input node to receive a control signal;
a polynomial multiplication circuitry to perform a polynomial multiplication operation using the first input and in a security mode determined by the control signal, the security mode comprising one of:
a first mode in which no side-channel protection is provided to the polynomial multiplication operation;
a second mode in which a shuffling-based side-channel protection is provided to the polynomial multiplication operation;
a third mode in which a masking or splitting side-channel protection is provided to the polynomial multiplication operation; or
a fourth mode in which a masking and shuffling based side-channel protection is provided to the polynomial multiplication operation.

2. The apparatus of claim 1, wherein the polynomial multiplication circuitry is to operate in the first mode in response to a detection of a computing environment in which side-channel protection is not required.

3. The apparatus of any one of claims 1-2, wherein the polynomial multiplication circuitry is to operate in the second mode in response to an initiation of at least one of an encryption key generation process or an encryption process.

4. The apparatus of any one of claims 1-2, wherein the polynomial multiplication circuitry comprises a random number generator to produce a random shuffle order and to apply the random shuffle order to operations computed during the at least one of a key generation process or an encryption process.

5. The apparatus of any one of claims 1-4, wherein the polynomial multiplication circuitry is to operate in the third mode in response to an initiation of a coefficient-wise multiplication process during decryption of Saber and Kyber.

6. The apparatus of any one of claims 1-5, wherein the polynomial multiplication circuitry is to operate in the fourth mode in response to an initiation of a coefficient-wise multiplication and an inverse (NTT) polynomial multiplication process during Saber or Kyber decryption.

7. The apparatus of any one of claims 1-6, wherein the polynomial multiplication circuitry is to split a polynomial before implementing the polynomial multiplication process in the third and the fourth modes.

8. A method, comprising:
receiving a first input in a first input node;
receiving a control signal in a second input node;
performing, in a polynomial multiplication circuitry, a polynomial multiplication operation using the first input in a security mode determined by the control signal, the security mode comprising one of:
a first mode in which no side-channel protection is provided to the polynomial multiplication operation;
a second mode in which a shuffling-based side-channel protection is provided to the polynomial multiplication operation;
a third mode in which a masking or splitting side-channel protection is provided to the polynomial multiplication operation; or
a fourth mode in which a masking and shuffling based side-channel protection is provided to the polynomial multiplication operation.

9. The method of claim 8, wherein the polynomial multiplication circuitry is to operate in the first mode in response to a detection of a computing environment in which side-channel protection is not required.

10. The method of any one of claims 8-9, wherein the polynomial multiplication circuitry is to operate in the second mode in response to an initiation of at least one of an encryption key generation process or an encryption process.

11. The method of any one of claims 8-10, wherein the polynomial multiplication circuitry comprises a random number generator to produce a random shuffle order and to apply the random shuffle order to operations computed during the at least one of a key generation process or an encryption process.

12. The method of any one of claims 8-11, wherein the polynomial multiplication circuitry is to operate in the third mode in response to an initiation of a coefficient-wise multiplication process during decryption of Saber and Kyber..

13. The method of any one of claims 8-12, wherein the polynomial multiplication circuitry is to operate in the fourth mode in response to an initiation of a coefficient-wise multiplication and an inverse (NTT) polynomial multiplication process during decryption of Saber and Kyber.

14. The method of any one of claims 8-13, wherein the polynomial multiplication circuitry is to split a polynomial before implementing the polynomial multiplication process in the third and the fourth modes.
